# EUROPEAN PATENT APPLICATION

(11) **EP 4 783 672 A1**
(43) Date of publication of application: **29.07.2026**
(21) Application number: 24870641.8
(22) Date of filing: 23.09.2024
(51) Int. Cl.: H04W 36/36

(54) **CONNECTION ADJUSTMENT METHOD AND COMMUNICATION APPARATUS**

(30) Priority: 28.09.2023 CN 202311294989
(71) Applicant: HUAWEI TECHNOLOGIES CO., LTD., Shenzhen 518129 (CN)
(72) Inventor: ZHU, Huiying, Shenzhen, Guangdong 518129 (CN); DONG, Pengpeng, Shenzhen, Guangdong 518129 (CN); WU, Fangzhou, Shenzhen, Guangdong 518129 (CN)
(74) Representative: Pfenning, Meinig & Partner mbB
(86) International application number: PCT/CN2024/120297
(87) International publication number: WO 2025/067097

(57) **Abstract**

Provided are a connection adjustment method and a communication apparatus, which may be applied to a scenario in which intra-frequency networking is performed and there is no communication connection between a source network device and a target network device. The source network device does not interact with the target network device, but sends, based on a measurement report, a message indicating a terminal device to establish a connection to a target cell, so that the terminal device can establish the connection to the target cell. Therefore, connection adjustment for the terminal device in the scenario in which intra-frequency networking is performed and there is no communication connection between the source network device and the target network device can be implemented. The network device provides an identifier of the target cell for the terminal device, and the terminal device may not perform cell search and selection, thereby helping reduce a connection adjustment delay. In addition, the method and the apparatus may be further applied to a scenario in which inter-frequency networking is performed and/or there is a communication connection between the source network device and the target network device. Because the source network device does not interact with the target network device, a connection adjustment delay is reduced.

## Description

This application claims priority to Chinese Patent Application No. 202311294989.7, filed with the China National Intellectual Property Administration on September 28, 2023 and entitled "CONNECTION ADJUSTMENT METHOD AND COMMUNICATION APPARATUS", which is incorporated herein by reference in its entirety.

### TECHNICAL FIELD

This application relates to the communication field, and more specifically, to a connection adjustment method and a communication apparatus.

### BACKGROUND

Mobility management is important content of wireless communication. A main objective of the mobility management is that when a terminal device continuously changes a serving node in a movement process, a network device enables, through the mobility management, the terminal device to use an uninterrupted wireless service. The mobility management is based on different RRC states of a terminal device. For a terminal device in an RRC connected state, the mobility management includes handover and redirection, and connection adjustment may be performed on the terminal device through the handover or redirection. However, in a scenario in which intra-frequency networking is performed and there is no communication connection between a source network device and a target network device, there is currently no solution that can implement connection adjustment for a terminal device.

### SUMMARY

This application provides a connection adjustment method and a communication apparatus, to support connection adjustment for a terminal device in a scenario in which intra-frequency networking is performed and there is no communication connection between a source network device and a target network device.

According to a first aspect, a connection adjustment method is provided. The method may be performed by a network device. Unless otherwise specified, the "network device" may be the network device, or may be an apparatus that can support the network device in implementing the function.

The method includes: receiving a measurement report from a terminal device; and sending a first message to the terminal device in response to the measurement report, where the first message indicates the terminal device to establish a connection to a target cell, the first message includes an identifier of the target cell, and the target cell is determined based on the measurement report.

"Sending the first message to the terminal device in response to the measurement report" may be understood as: after receiving the measurement report, sending, to the terminal device based on the measurement report, a first message carrying an identifier of a target cell, without interacting with a network device of the target cell.

The technical solution of this application may be applied to a scenario in which intra-frequency networking is performed and there is no communication connection between a source network device and a target network device. In this scenario, based on a conventional technology, connection adjustment for the terminal device cannot be implemented through either a handover procedure or a redirection procedure. This is because the handover procedure requires signaling exchange between the source network device and the target network device, and the redirection procedure supports only inter-frequency redirection. In the technical solution of this application, the network device may not interact with the target network device, but sends, to the terminal device based on the measurement report, the first message indicating the terminal device to establish a connection to the target cell, so that the terminal device establishes a connection to the target cell based on the first message, thereby implementing connection adjustment for the terminal device. Therefore, according to the technical solution of this application, connection adjustment for the terminal device in the scenario in which intra-frequency networking is performed and there is no communication connection between the source network device and the target network device can be implemented. In addition, compared with an existing redirection procedure, in the technical solution of this application, the network device provides the identifier of the target cell rather than information about a target frequency for the terminal device, so that the terminal device can directly establish the connection to the target cell based on the identifier of the target cell without performing cell search and selection, thereby helping reduce a connection adjustment delay.

In addition, the technical solution of this application may be further applied to a scenario in which inter-frequency networking is performed and/or there is a communication connection between a source network device and a target network device. Compared with an existing handover procedure, in the technical solution of this application, the network device may not interact with the network device of the target cell. Therefore, the connection adjustment delay is reduced. Compared with an existing redirection procedure, in the technical solution of this application, the network device provides the identifier of the target cell rather than the information about the target frequency for the terminal device, so that the terminal device can directly establish the connection to the target cell based on the identifier of the target cell without performing cell search and selection, thereby helping reduce the connection adjustment delay.

With reference to the first aspect, in some possible implementations, the first message is a radio resource control (radio resource control, RRC) connection release message. Another description may be that the first message is used for RRC connection release.

Based on the foregoing technical solution, the network device may provide the identifier of the target cell for the terminal device through the RRC connection release message. In other words, in a redirection process, the network device provides the identifier of the target cell rather than the information about the target frequency for the terminal device, so that the terminal device can directly establish the connection to the target cell based on the identifier of the target cell without performing cell search and selection, thereby helping reduce the connection adjustment delay.

With reference to any one of the first aspect or the implementations of the first aspect, in some other possible implementations, the RRC connection release message includes a first field, where the first field carries the identifier of the target cell. The first field may be a newly added field in the RRC connection release message, or an existing field in the RRC connection release message may be reused. This is not limited.

With reference to any one of the first aspect or the implementations of the first aspect, in some other possible implementations, the RRC connection release message further includes a second field, where the second field indicates that the RRC connection release message is used for redirection of the terminal device to the target cell. In addition, the second field may further indicate that the RRC connection release message is used for redirection of the terminal device to the target frequency. The second field may be a newly added field in the RRC connection release message, or an existing field in the RRC connection release message may be reused as the second field. This is not limited.

Based on the foregoing technical solution, when the second field indicates that the RRC connection release message is used for the redirection of the terminal device to the target cell, the terminal device may directly establish the connection to the target cell without performing cell search and selection. When the second field indicates that the RRC connection release message is used for the redirection of the terminal device to the target frequency, the terminal device may perform cell search and selection on the target frequency, to be redirected to a selected cell. In this way, different redirection manners may be supported based on the second field.

With reference to any one of the first aspect or the implementations of the first aspect, in some other possible implementations, the second field carries information about the target frequency for the redirection, the target frequency is the same as a frequency of a serving cell of the terminal device, and a frequency of the target cell is the target frequency. In addition, when the second field indicates that the RRC connection release message is used for the redirection of the terminal device to the target frequency, the second field carries the information about the target frequency for the redirection, and the target frequency is different from the frequency of the serving cell of the terminal device.

It may be understood that the serving cell of the terminal device may be a cell hosted by a network device that performs the method according to any one of the first aspect or the implementations of the first aspect or a cell that is managed by the network device and that provides a service for the terminal device. In a connection adjustment process, the serving cell may also be referred to as a source cell, and the network device may also be referred to as a source network device.

Based on the foregoing technical solution, when the second field carries information about a frequency that is the same as the frequency of the serving cell, it may indicate that the RRC connection release message is used for the redirection of the terminal device to the target cell, so that the terminal device can learn, based on the second field, that the redirection of the terminal device to the target cell needs to be performed. When the second field carries information about a frequency that is different from the frequency of the serving cell, it may indicate that the RRC connection release message is used for the redirection of the terminal device to the target frequency. In this case, the terminal device learns, based on the second field, that the redirection of the terminal device to the target frequency needs to be performed, and performs cell search and selection on the target frequency, to be redirected to a selected cell.

With reference to any one of the first aspect or the implementations of the first aspect, in some other possible implementations, the first field is included in a cell reselection priority field. That "the first field is included in a cell reselection priority field" may mean that the identifier of the target cell is carried in the cell reselection priority field. In an example, the cell reselection priority field carries only the identifier of the target cell. In another example, the cell reselection priority field carries the identifier of the target cell and a priority of the target cell. In still another example, in addition to the identifier of the target cell and an optional priority of the target cell, the cell reselection priority field may further carry information about one or more frequencies and priorities corresponding to the one or more frequencies.

With reference to any one of the first aspect or the implementations of the first aspect, in some other possible implementations, the method further includes: sending measurement configuration information to the terminal device, where the measurement configuration information includes intra-frequency measurement configuration information, and the measurement report is obtained based on the measurement configuration information.

Based on the foregoing technical solution, the network device may configure the intra-frequency measurement configuration information for the terminal device, and the measurement report may be a measurement report based on the intra-frequency measurement configuration information. Therefore, connection adjustment in a scenario in which intra-frequency networking is performed can be implemented in this solution.

With reference to any one of the first aspect or the implementations of the first aspect, in some other possible implementations, the intra-frequency measurement configuration information includes at least one of the following information: a measurement object, a report configuration, a trigger quantity, or a measurement identifier. A frequency of a synchronization signal and physical broadcast channel block (synchronization signal and physical broadcast channel block, SS/PBCH block or SSB) included in the measurement object is the same as a frequency of an SSB of the serving cell of the terminal device, and a subcarrier spacing of the SSB included in the measurement object is the same as a subcarrier spacing of the SSB of the serving cell.

With reference to any one of the first aspect or the implementations of the first aspect, in some other possible implementations, the network device and the network device of the target cell are intra-frequency, and there is no communication connection between the network device and the network device of the target cell. That there is no communication connection between the network device and the network device of the target cell may mean that there is no Xn interface or NG interface between the network device and the network device of the target cell.

According to a second aspect, a connection adjustment method is provided. The method may be performed by a terminal device. Unless otherwise specified, the "terminal device" may be a terminal device, or may be an apparatus that can support a terminal device in implementing the function.

The method includes: sending a measurement report to a network device; receiving a first message from the network device, where the first message indicates the terminal device to establish a connection to a target cell, the first message includes an identifier of the target cell, the target cell is determined based on the measurement report, and the first message is an RRC connection release message; and establishing a connection to the target cell based on the first message.

The technical solution of this application may be applied to a scenario in which intra-frequency networking is performed and there is no communication connection between a source network device and a target network device. In this scenario, based on a conventional technology, connection adjustment for the terminal device cannot be implemented through either a handover procedure or a redirection procedure. This is because the handover procedure requires signaling exchange between the source network device and the target network device, and the redirection procedure supports only inter-frequency redirection. In the technical solution of this application, the terminal device may perform a redirection procedure based on the RRC connection release message sent by the network device. Therefore, according to the technical solution of this application, connection adjustment for the terminal device in the scenario in which intra-frequency networking is performed and there is no communication connection between the source network device and the target network device can be implemented. In addition, compared with an existing redirection procedure, in the technical solution of this application, the network device provides the identifier of the target cell rather than information about a target frequency for the terminal device, so that the terminal device can directly establish the connection to the target cell based on the identifier of the target cell without performing cell search and selection, thereby helping reduce a connection adjustment delay.

In addition, the technical solution of this application may be further applied to a scenario in which inter-frequency networking is performed and/or there is a communication connection between a source network device and a target network device. Compared with the existing redirection procedure, the connection adjustment delay is reduced.

With reference to the second aspect, in some possible implementations, the RRC connection release message includes a first field, where the first field carries the identifier of the target cell.

With reference to any one of the second aspect or the implementations of the second aspect, in some other possible implementations, the RRC connection release message further includes a second field, where the second field indicates that the RRC connection release message is used for redirection of the terminal device to the target cell.

With reference to any one of the second aspect or the implementations of the second aspect, in some other possible implementations, the second field carries information about the target frequency for the redirection, the target frequency is the same as a frequency of a serving cell of the terminal device, and a frequency of the target cell is the target frequency.

With reference to any one of the second aspect or the implementations of the second aspect, in some other possible implementations, the first field is included in a cell reselection priority field.

With reference to any one of the second aspect or the implementations of the second aspect, in some other possible implementations, the method further includes: receiving measurement configuration information from the network device, where the measurement configuration information includes intra-frequency measurement configuration information; and determining the measurement report based on the measurement configuration information.

With reference to any one of the second aspect or the implementations of the second aspect, in some other possible implementations, the intra-frequency measurement configuration information includes at least one of the following information: a measurement object, a report configuration, a trigger quantity, or a measurement identifier. A frequency of an SSB included in the measurement object is the same as a frequency of an SSB of the serving cell of the terminal device, and a subcarrier spacing of the SSB included in the measurement object is the same as a subcarrier spacing of the SSB of the serving cell.

With reference to any one of the second aspect or the implementations of the second aspect, in some other possible implementations, the network device and a network device of the target cell are intra-frequency, and there is no communication connection between the network device and the network device of the target cell.

For terms or features that are in the second aspect or the implementations of the second aspect and that are the same as those in the first aspect or the implementations of the first aspect, refer to the first aspect or the implementations of the first aspect. For technical effects of the second aspect or the implementations of the second aspect, refer to technical effects of the first aspect or the implementations of the first aspect. Details are not described again in the second aspect.

According to a third aspect, a communication apparatus is provided. The communication apparatus may be a terminal device, or may be an apparatus, a module, a circuit, a chip, or the like disposed in a terminal device, or may be an apparatus that can be used in conjunction with a terminal device. In a design, the communication apparatus may include modules that are in one-to-one correspondence with the methods/operations/steps/actions described in the first aspect or the implementations of the first aspect. The module may be implemented by a hardware circuit, software, or a combination of a hardware circuit and software. In a design, the communication apparatus may include a processing module and a communication module.

The communication module is configured to perform a sending action in the method described in the first aspect or the implementations of the first aspect, and the processing module is configured to perform a processing-related action in the method described in the first aspect or the implementations of the first aspect.

According to a fourth aspect, a communication apparatus is provided. The communication apparatus may be a network device, or may be an apparatus, a module, a circuit, a chip, or the like disposed in a network device, or may be an apparatus that can be used in conjunction with a network device. In a design, the communication apparatus may include modules that are in one-to-one correspondence with the methods/operations/steps/actions described in the second aspect or the implementations of the second aspect. The module may be implemented by a hardware circuit, software, or a combination of a hardware circuit and software. In a design, the communication apparatus may include a processing module and a communication module.

The receiving module is configured to perform a receiving action in the method described in the second aspect or the implementations of the second aspect, and the processing module is configured to perform a processing-related action in the method described in the second aspect or the implementations of the second aspect.

According to a fifth aspect, a communication apparatus is provided, including a processing circuit and a storage medium, where the storage medium stores instructions, and when the instructions are run by the processing circuit, the method according to any one of the first aspect or the possible implementations of the first aspect or the method according to any one of the second aspect or the possible implementations of the second aspect is implemented.

Optionally, the communication apparatus may be a source network device or a terminal device.

Optionally, the communication apparatus may be a chip used in a source network device or a terminal device.

According to a sixth aspect, a communication apparatus is provided, including a processing circuit, where the processing circuit is configured to process data and/or information, so that the method according to any one of the first aspect or the possible implementations of the first aspect or the method according to any one of the second aspect or the possible implementations of the second aspect is implemented. Optionally, the apparatus may further include a memory, where the memory is configured to store a program or instructions. Optionally, the communication apparatus may further include a communication interface, where the communication interface is configured to: receive data and/or information, and transmit the received data and/or information to the processing circuit. Optionally, the communication interface is further configured to output data and/or information processed by the processing circuit. The communication interface may also be referred to as an interface circuit or a transceiver circuit.

Optionally, the communication apparatus may be a source network device or a terminal device.

Optionally, the communication apparatus may be a chip used in a source network device or a terminal device.

According to a seventh aspect, a chip system is provided, including a processing circuit, where the processing circuit is configured to run a program or instructions, so that the method according to any one of the first aspect or the possible implementations of the first aspect or the method according to any one of the second aspect or the possible implementations of the second aspect is implemented. Optionally, the chip system may further include an input/output interface. Optionally, the chip system may further include a memory, where the memory is configured to store the program or the instructions. The processing circuit may also be referred to as a logic circuit.

According to an eighth aspect, a computer-readable storage medium is provided, where the computer-readable storage medium includes instructions, and when the instructions are run by a processing circuit, the method according to any one of the first aspect or the possible implementations of the first aspect or the method according to any one of the second aspect or the possible implementations of the second aspect is implemented.

According to a ninth aspect, a computer program product is provided, where the computer program product includes computer program code or instructions, and when the computer program code or the instructions are run, the method according to any one of the first aspect or the possible implementations of the first aspect or the method according to any one of the second aspect or the possible implementations of the second aspect is implemented.

According to a tenth aspect, a communication system is provided, where the communication system includes one or a combination of the following apparatuses: a communication apparatus that performs the method according to any one of the first aspect or the possible implementations of the first aspect or a communication apparatus that performs the method according to any one of the second aspect or the possible implementations of the second aspect.

### BRIEF DESCRIPTION OF DRAWINGS

FIG. 1 is a diagram of a communication system to which an embodiment of this application is applicable;
FIG. 2 is a schematic flowchart of a connection adjustment method 500 according to an embodiment of this application;
FIG. 3 is a diagram of a structure of an apparatus according to an embodiment of this application;
FIG. 4 is a diagram of another structure of an apparatus according to an embodiment of this application; and
FIG. 5 is a diagram of a chip system according to an embodiment of this application.

### DESCRIPTION OF EMBODIMENTS

For ease of understanding embodiments of this application, before embodiments of this application are described, the following descriptions are first provided.

An "indication" includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured. That information C is used to determine information D includes that the information D is determined only based on the information C, and also includes that the information D is determined based on the information C and other information. In addition, that the information C is used to determine the information D may further include an indirect determining case. For example, the information D is determined based on information E, and the information E is determined based on the information C. That "a network element A sends information A to a network element B" may be understood as that a destination end of the information A or an intermediate network element in a transmission path between the network element A and the destination end is the network element B, and may include directly or indirectly sending information to the network element B. That "a network element B receives information A from a network element A" may be understood as that a source end of the information A or an intermediate network element in a transmission path between the network element B and the source end is the network element A, and may include directly or indirectly receiving information from the network element A. The information may undergo necessary processing, for example, a format change, between the source end for sending the information and the destination end. However, the destination end may understand valid information from the source end. Various numbers such as first and second are merely used for differentiation for ease of description, and are not used to limit the scope of embodiments of this application, for example, to distinguish between different messages and different information. "Predefinition" may be implemented by pre-storing corresponding code or a corresponding table in a device, or may be implemented in another manner that may indicate related information. A specific implementation of the predefinition is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. Words such as "exemplary", "for example", "example", and "in an (another) example" represent giving an example, an illustration, or a description. Any embodiment or design scheme described as an "example" in this application should not be explained as being more preferred or having more advantages than another embodiment or design scheme. The terms "include", "have", and their variants all mean "include but are not limited to", unless otherwise specifically emphasized in another manner. "At least one" means one or more, and "a plurality of" means two or more. "At most one" means one or zero. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Descriptions such as "when...", "in a case of...", and "if" all mean that a device performs corresponding processing in an objective case, and are not limited to time, and the device is not required to perform a determining action during implementation. This does not mean that there is another limitation.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes a communication system to which embodiments of this application may be applied.

The technical solutions provided in this application may be applied to various communication systems, for example, a 5th generation (5th generation, 5G) system or an NR system, an LTE system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in the communication system may send a signal to another device or receive a signal from another device. The signal may include information, signaling, data, or the like. The device may alternatively be replaced with an entity, a network entity, a communication device, a communication module, a node, a communication node, or the like. In the present disclosure, a device is used as an example for description. For example, the communication system may include at least one terminal device and at least one network device. The network device may send a downlink signal to the terminal device, and/or the terminal device may send an uplink signal to the network device. It may be understood that the terminal device in this application may be replaced with a first device, the network device may be replaced with a second device, and the terminal device and the network device perform a corresponding communication method in this application.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), customer-premises equipment (Customer-Premises Equipment, CPE), a handheld device having a wireless communication function, a computing device or another processing device connected to a wireless modem, a terminal device in a 5G network, a terminal device in a future evolved public land mobile network (public land mobile network, PLMN), and the like. This is not limited in embodiments of this application.

By way of example but not limitation, in embodiments of this application, the terminal device may alternatively be a wearable device. The wearable device may also be referred to as an intelligent wearable device, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. In a broad sense, intelligent wearable devices include full-featured and large-sized devices that can implement all or some functions without relying on smartphones, for example, smart watches or smart glasses, and devices that focus only on a specific type of application function and need to be used together with other devices such as smartphones, for example, various smart bands or smart jewelry for monitoring physical signs. In embodiments of this application, an apparatus configured to implement a function of the terminal device may be a terminal device, or may be an apparatus that can support the terminal device in implementing the function. The apparatus may be installed in the terminal device or used in conjunction with the terminal device.

For example, the apparatus that supports the terminal device in implementing a function of the terminal device may be a chip system. In embodiments of this application, the chip system may include a chip, or may include a chip and another discrete component.

For example, the apparatus that supports the terminal device in implementing a function of the terminal device may alternatively be a part that is in the network device and that is configured to implement the function of the terminal device. For example, the network device may be an integrated access and backhaul (integrated access and backhaul, IAB) node (node). The IAB node integrates two parts: a mobile termination (mobile termination, MT) and a distributed unit (distributed unit, DU), or the IAB node integrates an MT and a base station (base station, BS), where the BS includes a CU and a DU. When facing a parent node of the IAB node, the IAB node plays a role of the MT, and may be considered as a terminal.

In embodiments of this application, an example in which the apparatus configured to implement the function of the terminal device is a terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. The network device may be a device having a wireless transceiver function or a chip that can be disposed in the device, and may be deployed in a radio access network to provide a wireless communication service for the terminal device. In embodiments of this application, the network device may be a radio access network (radio access network, RAN) node (or device) that enables the terminal device to access a wireless network. The base station may cover or be replaced with the following names in a broad sense, for example, a NodeB (NodeB), an evolved NodeB (evolved NodeB, eNB), a next generation NodeB (next generation NodeB, gNB), a radio network controller (radio network controller, RNC), a base station controller (base station controller, BSC), a base transceiver station (base transceiver station, BTS), a relay station, an access point, a wireless relay node, a wireless backhaul node, a transmitting and receiving point (transmitting and receiving point, TRP), a transmitting point (transmitting point, TP), an integrated access and backhaul (integrated access and backhaul, IAB) node, a master base station, a secondary base station, a multi-standard radio (multi-standard radio node, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, and the like. The base station may be a macro base station, a micro base station, a relay node, a donor node, or the like, or a combination thereof. The IAB node integrates two parts: an MT and a DU, or the IAB node integrates two parts: an MT and a base station (base station, BS), where the BS includes a CU and a DU. When facing a child node of the IAB node (the child node may be a terminal or a terminal part of another IAB node), the IAB node may be considered as a network device. A DU part of an IAB node may provide an access service for a terminal device or an MT part of another IAB node.

The base station may alternatively be a communication module, a modem, or a chip disposed in the foregoing device or apparatus. The base station may alternatively be a mobile switching center, a device that functions as a base station in D2D, V2X, or M2M communication, a network side device in a 6G network, a device that functions as a base station in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU, a DU, or both a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or two of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different split modes between the DU and the RU correspond to different categories (categories, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions after the demapping (for example, one or two of digital BF or fast Fourier transform (fast Fourier transform, FFT)/CP removal) are moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be installed in the network device or used in conjunction with the network device. In embodiments of this application, an example in which the apparatus configured to implement the function of the network device is a network device is merely used for description, and constitutes no limitation on the solutions in embodiments of this application.

The network device and/or the terminal device may be deployed on land, including an indoor device, an outdoor device, a handheld device, or a vehicle-mounted device, may be deployed on water, or may be deployed on an airplane, a balloon, and a satellite in the air. A scenario in which the network device and the terminal device are located is not limited in embodiments of this application. In addition, the terminal device and the network device may be hardware devices, may be software functions running on dedicated hardware or software functions running on general-purpose hardware, for example, virtualized functions instantiated on a platform (for example, a cloud platform), or may be entities including a dedicated or general-purpose hardware device and a software function. Specific forms of the terminal device and the network device are not limited in this application.

Embodiments of this application may be applied to a plurality of scenarios, for example, may be applied to any one of the following scenarios: relay (relay), a wireless mesh (mesh) network, IAB, an ad hoc network, or the like. In the foregoing scenarios, a networking node includes a node that has all or some functions of a base station or a node that has a wireless backhaul function and a wireless access function.

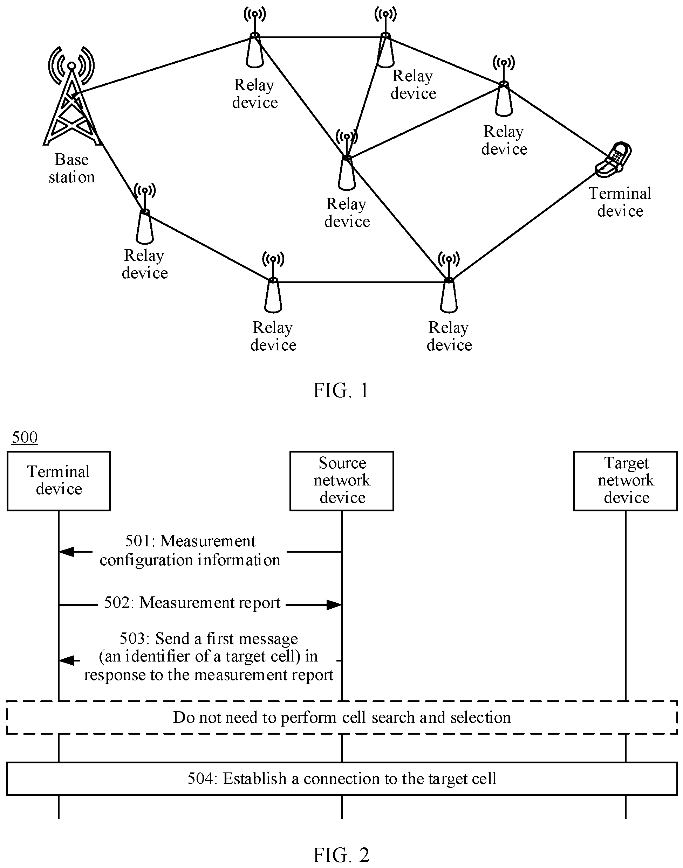

FIG. 1 is a diagram of an architecture of a communication system to which an embodiment of this application may be applied. As shown in FIG. 1, the communication system may include a base station, a relay device, and a terminal device. The terminal device may perform wireless communication with the base station directly or through one or more relay devices.

For ease of understanding embodiments of this application, several concepts or terms in embodiments of this application are briefly described. The concepts or the terms described below are described based on concepts or terms specified in a protocol. However, this does not mean that embodiments of this application can be applied only to a current existing system, and the concepts or the terms in embodiments of this application can be applied to a future system. In addition, specific names of the concepts or the terms (for example, concepts or terms related to functional descriptions) may be adjusted with development of the future system.

### 1. Mobility management

Mobility management is important content of wireless communication. A main objective of the mobility management is that when a terminal device continuously changes a serving node in a movement process, a network device enables, through the mobility management, the terminal device to use an uninterrupted wireless service.

In a 5G control plane protocol stack, an RRC layer and a protocol layer below the RRC layer are referred to as an access stratum (access stratum, AS), and a protocol layer above the RRC layer is referred to as a non-access stratum (non-access stratum, NAS). Simply, an AS procedure is a procedure in which a terminal device and a network device need to participate in processing, and an NAS procedure is a procedure in which only a terminal device and a core network need to perform processing, and a network device only performs forwarding and does not perform processing. Different protocol layers define different layer states (for example, an NAS layer state and an RRC layer state). Generally, the mobility management is based on an RRC layer state (briefly referred to as an RRC state below) of the terminal device.

The RRC state of the terminal device reflects a status of an AS connection of the terminal device, where the AS connection is a signaling connection between the terminal device and the network device. AS signaling exchange establishes a signaling path between the terminal device and the core network, so that NAS signaling exchange can be performed. That is, the AS connection serves as a bridge for the NAS signaling exchange.

The RRC state includes an RRC connected state and an RRC idle state.

RRC connected state: When there is a signaling connection between the terminal device and the network device, that is, the terminal device and the network device "communicate" with each other, the terminal device is in the RRC connected state even if there is no data transmission but only RRC signaling transmission. However, generally, an RRC signaling connection between the terminal device and the network device is established only for data transmission.

RRC idle state: Equivalent to that there is no information exchange (namely no data transmission and no RRC signaling transmission) between the terminal device and the network device.

In addition, with development of communication technologies, an "intermediate" state, namely an RRC inactive (inactive) state, is added to the RRC state.

RRC inactive state: To enable the terminal device to resume to the RRC connected state more quickly, for the terminal device in the RRC inactive state, the network device retains some information that does not need to be retained in the RRC idle state. Simply, an air interface state of the terminal device in the RRC inactive state is similar to that of the terminal device in the RRC idle state. However, from a perspective of the core network side, the terminal device in the RRC inactive state is still in a connection management (connection management, CM) connected state. When there is a data transmission requirement and the terminal device needs to be transitioned from the RRC inactive state to the RRC connected state, compared with being transitioned from the RRC idle state to the RRC connected state, procedures such as bearer establishment and authentication are omitted, so that a service of the terminal device can be resumed more quickly.

Transition from the RRC connected state to the RRC idle state and transition from the RRC connected state to the RRC inactive state are both implemented through RRC connection release (RRCConnectionRelease). Whether an RRC connection release message carries a suspend configuration (suspendConfig) may be checked to determine whether the terminal device enters the RRC idle state or the RRC inactive state after an RRC connection is released. If the RRC connection release message carries the suspend configuration, it indicates that the terminal device enters the RRC inactive state. If the RRC connection release message does not carry the suspend configuration, it indicates that the terminal device enters the RRC idle state.

The mobility management is based on different RRC states of the terminal device. The mobility management in different RRC states is classified into:
(1) RRC connected state mobility management: handover or redirection;
(2) RRC idle state mobility management: cell reselection; and
(3) RRC inactive state mobility management: cell reselection, RAN-based notification area (RAN-based Notification Area, RNA) update, or the like.

### 2. Handover

Handover, which may also be referred to as cell handover, is a most fundamental but extremely important basic function of a communication system. Simply, handover supports a terminal device in handing over from one network device to another network device. In an RRC connected state, there is a connection between a terminal device and a network device, and signaling exchange may be performed. The network device may send measurement configuration information to the terminal device, to request the terminal device to report a measurement report. The network device determines, based on the measurement report, whether a state of the terminal device meets a handover condition, and performs a handover procedure when the terminal device meets the handover condition.

The handover procedure may include: A source network device performs handover decision, and determines that the terminal device needs to perform a handover; handover preparation is performed between the source network device and a target network device, for example, resource application, data forwarding, and the like are performed between the source network device and the target network device; after receiving a handover request response sent by the target network device, the source network device delivers a handover command to the terminal device, where the handover command may include an identifier of a target cell; and the terminal device performs the handover based on the handover command.

From a perspective of an interface, a handover may be classified into an Xn-based handover and an NG-based handover. Regardless of the Xn-based handover or the NG-based handover, signaling exchange needs to be performed between the source network device and the target network device.

In a handover process, the terminal device keeps being in the RRC connected state.

### 3. Redirection

Redirection, which may also be referred to as cell redirection, is mainly used in a scenario in which a current serving cell is overloaded, or a terminal device has moved to a cell edge and a handover needs to be triggered, but in this case, the terminal device does not support the handover. Redirection is usually a transition means prepared for a terminal device that does not support a handover. Redirection is performed in a manner of RRC connection release with redirection. To be specific, when it is determined that redirection is required for a terminal device, a source network device initiates RRC release, and recommends a target frequency to the terminal device during release, where the target frequency may be indicated to the terminal device through redirected carrier information (redirectedCarrierInfo) in an RRC connection release message, and after an RRC connection to the source network device is released, the terminal device may perform cell search and selection based on the target frequency, to access a new network device.

In a redirection process, a terminal device in an RRC connected state first releases a connection to a source network device, and then re-establishes a connection on a target frequency recommended by the source network device. Currently, a redirection procedure only supports inter-frequency redirection, and redirection cannot be performed in intra-frequency networking.

Currently, in a case of intra-frequency networking, when there is no Xn interface or NG interface between a source network device and a target network device, neither a handover procedure nor a redirection procedure can be implemented. Therefore, connection adjustment for a terminal device cannot be implemented.

For the foregoing problem, this application provides a connection adjustment method and a communication apparatus, to support connection adjustment for a terminal device in a scenario in which intra-frequency networking is performed and there is no communication connection between a source network device and a target network device.

The following describes a method embodiment of this application.

FIG. 2 is a schematic flowchart of a connection adjustment method 500 according to an embodiment of this application.

The method 500 may be performed by a terminal device, a source network device, and a target network device. Unless otherwise specified, the "terminal device", the "source network device", or the "target network device" may be a terminal device, a source network device, or a target network device, or may be an apparatus that can support a terminal device, a source network device, or a target network device in implementing the function. For ease of description, the following uniformly uses the terminal device, the source network device, or the target network device for description.

It should be noted that a node corresponding to the terminal device, the source network device, or the target network device may include only a function of the terminal device, the source network device, or the target network device, or may include another function based on a function of the terminal device, the source network device, or the target network device. This is not limited. For example, in addition to a function of the terminal device, a node corresponding to the terminal device may further include a function of the network device. For example, the node may be an IAB node, and the IAB node may integrate two parts: an MT and a DU, or the IAB node may integrate two parts: an MT and a base station. In other words, the node includes both the function of the terminal device and the function of the network device. For another example, in addition to a function of the source network device or the target network device, a node corresponding to the source network device or the target network device may further include a function of the terminal device. For example, the node may be an IAB node. For another example, in addition to a function of the source network device or the target network device, a node corresponding to the source network device or the target network device may further include a function of a core network device.

The method 500 includes at least some of the following content.

Step 501: After the terminal device establishes an RRC connection to the source network device, the source network device sends measurement configuration information to the terminal device, and correspondingly, the terminal device receives the measurement configuration information from the source network device.

The measurement configuration information may include one or more of the following information.
(1) Measurement object. The measurement object is an object on which the terminal device performs measurement, and mainly includes one or more of the following information: an SSB frequency, an SSB subcarrier spacing, an SSB-based measurement timing configuration (SSB-based measurement timing configuration, SMTC), a whitelisted cell list, or a blacklisted cell list.

Each cell periodically sends a plurality of SSB beams in time domain (that is, performs SSB beam scanning). In frequency domain, all the SSB beams in each cell are sent at a same frequency domain position. To ensure that all SSB beams in each cell are accurately and completely measured, when delivering a measurement configuration, in addition to a to-be-measured SSB frequency, the source network device may further indicate at least one of a time domain start position for starting SSB measurement and duration, namely the SMTC. The SMTC includes at least one of an SMTC period, SMTC duration, and an SMTC offset. The time domain start position may be start time at which the terminal device starts the SSB measurement, and may be determined based on the SMTC period and the SMTC offset. It may be understood that at least one of the SMTC period, the SMTC duration, and the SMTC offset that is not indicated may have a predefined value, where the SMTC period, the SMTC duration, and the SMTC offset are included in the SMTC.

The source network device may further configure specific to-be-measured cell lists, namely a blacklisted cell list and a whitelisted cell list. For a cell included in a blacklist, the terminal device does not perform measurement or reporting on the cell. For a cell included in a whitelist, the terminal device performs measurement on a corresponding measurement frequency, and reports a measurement report.

(2) Measurement gap (measurement gap). The measurement gap is a time period during which the terminal device leaves a current frequency and performs measurement on another frequency, and is configured only for inter-frequency measurement and inter-system measurement.

(3) Report configuration. The report configuration indicates criteria for triggering reporting of a measurement report and indicates a format of the measurement report. Each report configuration has a separate identifier (reportConfigId).

(4) Trigger quantity. The trigger quantity is a policy for triggering event reporting, and may include at least one of reference signal received power (reference signal received power, RSRP), a received signal strength indicator (received signal strength indicator, RSSI), reference signal received quality (reference signal received quality, RSRQ), and a signal to interference plus noise ratio (signal to interference plus noise ratio, SINR).

(5) Measurement identifier (identifier, ID). The measurement identifier is used to combine the measurement object and the report configuration to form a whole.

In this embodiment of this application, the measurement configuration information may include measurement configuration information of SSB-based inter-frequency measurement and/or measurement configuration information of SSB-based intra-frequency measurement. This is not limited.

The SSB-based inter-frequency measurement may mean that a frequency of an SSB used for measurement of a neighboring cell is different from a frequency of an SSB of a serving cell, and/or a subcarrier spacing of the SSB used for measurement of the neighboring cell is different from a subcarrier spacing of the SSB of the serving cell. Content included in the measurement configuration information of the SSB-based inter-frequency measurement may be as described above, and the measurement configuration information includes a measurement gap.

The SSB-based intra-frequency measurement may mean that a frequency of an SSB used for measurement of a neighboring cell is the same as a frequency of an SSB of a serving cell, and a subcarrier spacing of the SSB used for measurement of the neighboring cell is the same as a subcarrier spacing of the SSB of the serving cell. The measurement configuration information of the SSB-based intra-frequency measurement may include one or more of a measurement object, a report configuration, a trigger quantity, or a measurement identifier, and may not include a measurement gap. A frequency of an SSB included in the measurement object is the same as a frequency of an SSB of a serving cell, and a subcarrier spacing of the SSB included in the measurement object is the same as a subcarrier spacing of the SSB of the serving cell.

In a possible implementation, the source network device sends the measurement configuration information to the terminal device through an RRC connection reconfiguration (RRC Connection Reconfiguration) message.

In this embodiment of this application, the serving cell may be a cell that currently provides a service for the terminal device. In a connection adjustment process, the serving cell may also be referred to as a source cell, and is a cell that is hosted by the source network device and that provides a service for the terminal device.

Step 502: The terminal device performs measurement based on the received measurement configuration information, determines a measurement report, and sends the measurement report to the source network device, and correspondingly, the source network device receives the measurement report from the terminal device.

When the source network device delivers the measurement configuration information of the SSB-based inter-frequency measurement to the terminal device, the measurement report reported by the terminal device is a measurement result of the SSB-based inter-frequency measurement. When the source network device delivers the measurement configuration information of the SSB-based intra-frequency measurement to the terminal device, the measurement report reported by the terminal device is a measurement result of the SSB-based intra-frequency measurement.

In this embodiment of this application, reporting of the measurement report by the terminal device may be triggered by an event, or may be triggered periodically. This is not limited.

Step 503: The source network device sends, in response to the received measurement report, a first message to the terminal device, and correspondingly, the terminal device receives the first message from the source network device.

The first message indicates the terminal device to establish a connection to a target cell, and the first message includes an identifier of the target cell. The identifier of the target cell is information used to uniquely determine the target cell. For example, the identifier of the target cell may be a physical cell identifier (physical cell identifier, PCI) of the target cell. For a detailed description of the first message, refer to content after step 504.

In a possible implementation, that the source network device sends, in response to the received measurement report, the first message to the terminal device includes: The source network device determines, based on the received measurement report, to perform connection adjustment on the terminal device to access a corresponding target cell, and sends the first message to the terminal device, where the first message includes an identifier of the target cell. For example, the source network device determines, based on the received measurement report, whether there is an appropriate new cell. If there is an appropriate new cell, the source network device uses the new cell as a target cell to perform connection adjustment on the terminal device. If there is no appropriate new cell, the source network device waits for a next measurement report. The appropriate new cell may be a cell that is better than a serving cell in one or more of signal quality, a channel state, a load state, coverage, or the like. A specific operation for connection adjustment performed on the terminal device is not limited in this embodiment of this application. For example, the connection adjustment may be a cell handover. For example, the connection adjustment may be redirection.

Step 504: The terminal device establishes a connection to the target cell based on the first message.

In this embodiment of this application, that "the source network device sends, in response to the received measurement report, the first message to the terminal device" may be understood as: After receiving the measurement report, the source network device sends, to the terminal device based on the measurement report, the first message that carries the identifier of the target cell. Compared with an existing handover procedure, in this embodiment of this application, the source network device does not perform interaction with the target network device, and sends, to the terminal device based on the measurement report, the first message that carries the identifier of the target cell, rather than sending the first message based on a handover request acknowledgment (HandoverRequestAck) message from the target network device or a handover command (HandoverCommand) from the core network device. This can reduce signaling overheads and reduce a connection adjustment delay. Compared with an existing redirection procedure, the source network device directly provides the identifier of the target cell rather than information about a target frequency for the terminal device, so that the terminal device can directly establish the connection to the target cell based on the identifier of the target cell without performing cell search and selection, thereby helping reduce the connection adjustment delay.

In addition, in a scenario in which intra-frequency networking is performed and there is no Xn interface or NG interface between the source network device and the target network device, neither a handover procedure nor a redirection procedure can be performed. Consequently, connection adjustment for the terminal device cannot be performed. In this embodiment of this application, the source network device does not interact with the target network device, and the source network device may provide intra-frequency measurement configuration information for the terminal device. Therefore, according to the method in this embodiment of this application, connection adjustment in a scenario in which intra-frequency networking is performed and there is no communication connection between the source network device and the target network device.

The following describes in detail the first message in this embodiment of this application.

A specific type of the first message is not limited in this embodiment of this application.

In a possible implementation, the first message may be a newly added type of RRC message. The RRC message includes at least the identifier of the target cell for the terminal device to directly establish a connection to the target cell, for example, initiate random access to the target cell.

In another possible implementation, when the source network device determines to perform a cell handover for the terminal device, the first message may be an RRC connection reconfiguration message. The message may carry a handover command, and the handover command includes the identifier of the target cell.

In another possible implementation, when the source network device determines to perform redirection for the terminal device, the first message may be an RRC connection release message. Different from an existing RRC connection release message, the RRC connection release message in this embodiment of this application carries the identifier of the target cell rather than the information about the target frequency. In this case, "the first message indicates the terminal device to access the target cell" may be described as: The first message indicates the terminal device to be redirected to the target cell.

A manner of implementing a function of the first message through the RRC connection release message is not specifically limited in this embodiment of this application.

In a possible implementation, the RRC connection release message includes a first field, where the first field carries the identifier of the target cell. The first field may be a newly added field. In this way, after receiving the RRC connection release message, the terminal device may determine, based on whether the RRC connection release message carries the first field, whether the RRC connection release message is used for redirection of the terminal device to the target cell, and if the RRC connection release message carries the first field, after releasing a current RRC connection, the terminal device directly establishes a connection to the target cell based on the identifier of the target cell in the first field, for example, initiates random access to the target cell without performing cell search and selection.

The following provides an example of a structure of the RRC connection release message in this implementation.

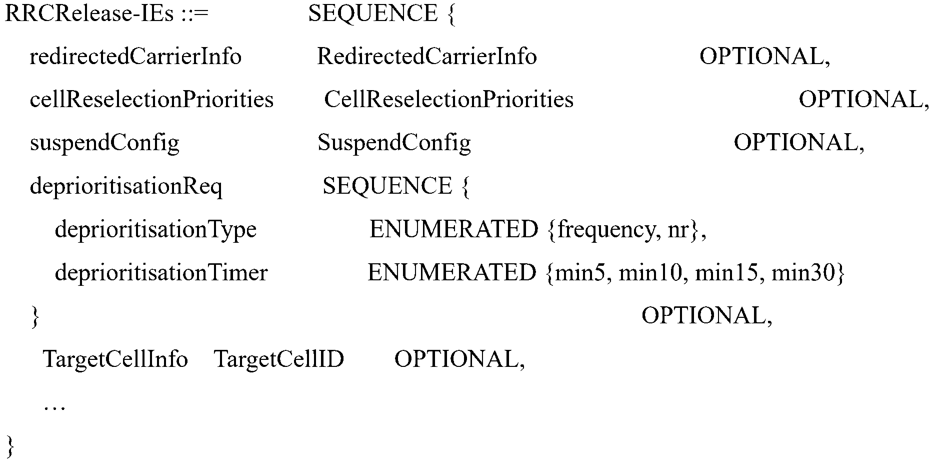

For example, an information element or a field in the structure of the RRC connection release message adapted to the foregoing implementation includes a redirected carrier information field, for example, redirectedCarrierInfo, a cell reselection priority field, for example, cellReselectionPriorities, a suspend configuration field, for example, suspendConfig, a deprioritisation type field, for example, deprioritisationReqType, a deprioritisation timer field, for example, deprioritisationTimer, and a first field, for example, TargetCellInfo. Optional indicates that a corresponding field is optional. Depending on a function of the RRC connection release message, the RRC connection release message carries different information elements, or information elements carried by the RRC connection release message indicate or carry different content. For example, when the RRC connection release message is used for cell reselection, the RRC connection release message may carry the cell reselection priority field, for example, cellReselectionPriorities. For another example, when the RRC connection release message is used for redirection of the terminal device to the target frequency, the RRC connection release message may carry the redirected carrier information field, for example, redirectedCarrierInfo. For another example, when the RRC connection release message is used for redirection of the terminal device to the target cell, the RRC connection release message may carry the first field, for example, TargetCellInfo.

In another possible implementation, the RRC connection release message includes a first field and a second field, where the first field carries the identifier of the target cell, and the second field indicates that the RRC connection release message is used for redirection of the terminal device to the target cell.

For example, both the first field and the second field are newly added fields. When the second field indicates that the RRC connection release message is used for redirection of the terminal device to the target cell, the RRC connection release message includes the first field. In this case, the terminal device learns, based on the second field, that the RRC connection release message is used for the redirection of the terminal device to the target cell, and directly establishes a connection to the target cell based on the first field without performing cell search and selection. When the second field indicates that the RRC connection release message is used for redirection of the terminal device to the target frequency, the RRC connection release message may include the first field, or may not include the first field, and the redirected carrier information (redirectedCarrierInfo) field in the RRC connection release message carries information about the target frequency for the redirection. In this case, the terminal device learns, based on the second field, that the RRC connection release message is used for the redirection of the terminal device to the target frequency, and performs, based on the information about the target frequency that is carried in the redirected carrier information field, cell search and selection on the target frequency, to be redirected to a selected cell.

The following provides an example of a structure of the RRC connection release message in this implementation.

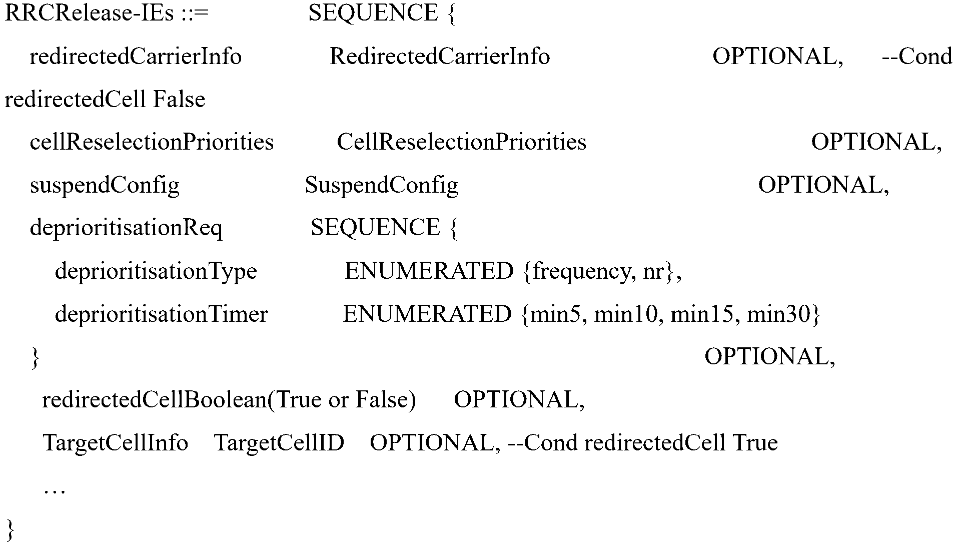

For example, an information element or a field in the structure of the RRC connection release message adapted to the foregoing implementation includes a redirected carrier information field, for example, redirectedCarrierInfo, a cell reselection priority field, for example, cellReselectionPriorities, a suspend configuration field, for example, suspendConfig, a deprioritisation type field, for example, deprioritisationReqType, a deprioritisation timer field, for example, deprioritisationTimer, a first field, for example, TargetCellInfo, and a second field, for example, redirectedCell. Optional indicates that a corresponding field is optional. Depending on a function of the RRC connection release message, the RRC connection release message carries different information elements, or information elements carried by the RRC connection release message indicate or carry different content. For example, when the RRC connection release message is used for cell reselection, the RRC connection release message may carry the cell reselection priority field. For another example, when the RRC connection release message is used for redirection of the terminal device to the target frequency, the RRC connection release message may carry the second field and the redirected carrier information field, where the second field indicates that the RRC connection release message is used for the redirection of the terminal device to the target frequency. For another example, when the RRC connection release message is used for redirection of the terminal device to the target cell, the RRC connection release message may carry the first field and the second field, where the second field indicates that the RRC connection release message is used for the redirection of the terminal device to the target cell. Cond redirectedCell True indicates that a corresponding field is valid or mandatory when redirectedCell is true, and Cond redirectedCell False indicates that a corresponding field is valid or mandatory when redirectedCell is false.

For example, the first field carries the identifier of the target cell, and the first field is further used to carry the information about the target frequency for the redirection. The second field is a newly added field. Specifically, when the second field indicates that the RRC connection release message is used for redirection of the terminal device to the target cell, the first field carries the identifier of the target cell. In this case, the terminal device learns, based on the second field, that the RRC connection release message is used for the redirection of the terminal device to the target cell, and directly establishes a connection to the target cell based on the first field without performing cell search and selection. When the second field indicates that the RRC connection release message is used for redirection of the terminal device to the target frequency, the first field carries information about the target frequency for the redirection. In this case, the terminal device learns, based on the second field, that the RRC connection release message is used for the redirection of the terminal device to the target frequency, and performs, based on the information about the target frequency that is carried in the first field, cell search and selection on the target frequency, to be redirected to a selected cell.

The following provides an example of a structure of the RRC connection release message in this implementation.

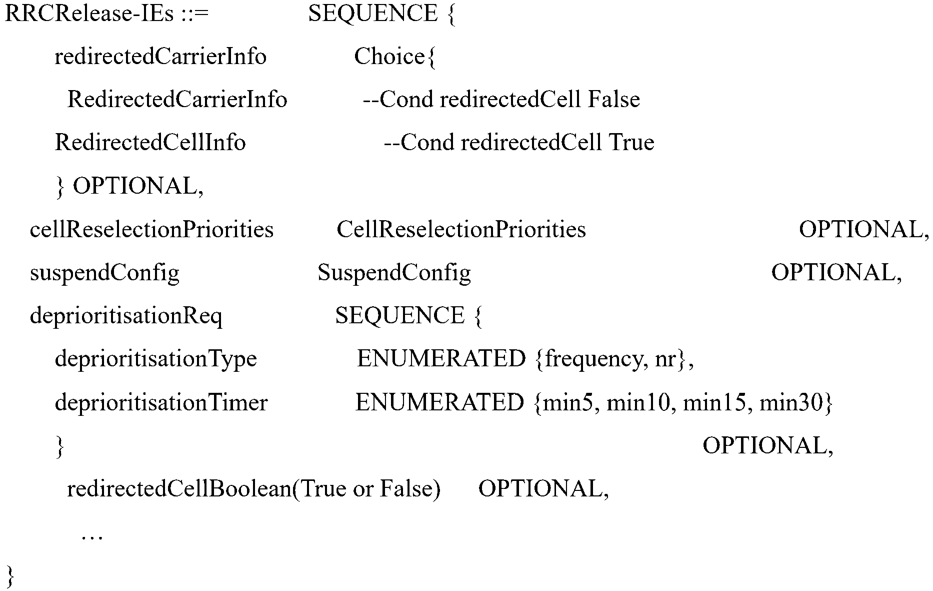

That "the first field carries the identifier of the target cell, and the first field is further used to carry the information about the target frequency for the redirection" may also be described as: The first field is a redirected carrier information field, and the redirected carrier information field carries the identifier of the target cell when the second field indicates that the RRC connection release message is used for the redirection of the terminal device to the target cell, or the redirected carrier information field carries the information about the target frequency for the redirection when the second field indicates that the RRC connection release message is used for the redirection of the terminal device to the target frequency.

For example, an information element or a field in the structure of the RRC connection release message adapted to the foregoing implementation includes a redirected carrier information field, for example, redirectedCarrierInfo, a cell reselection priority field, for example, cellReselectionPriorities, a suspend configuration field, for example, suspendConfig, a deprioritisation type field, for example, deprioritisationReqType, a deprioritisation timer field, for example, deprioritisationTimer, and a second field, for example, redirectedCell. Optional indicates that a corresponding field is optional. Depending on a function of the RRC connection release message, the RRC connection release message carries different information elements, or information elements carried by the RRC connection release message indicate or carry different content. For example, when the RRC connection release message is used for cell reselection, the RRC connection release message may carry the cell reselection priority field. For another example, when the RRC connection release message is used for redirection of the terminal device to the target frequency, the RRC connection release message may carry the second field and the redirected carrier information field, where the second field indicates that the RRC connection release message is used for the redirection of the terminal device to the target frequency, for example, redirectedCell is false, and the redirected carrier information field carries information about the target frequency. For another example, when the RRC connection release message is used for redirection of the terminal device to the target cell, for example, redirectedCell is true, the RRC connection release message may carry the second field and the redirected carrier information field, where the second field indicates that the RRC connection release message is used for the redirection of the terminal device to the target cell, and the redirected carrier information field carries the identifier of the target cell. Cond redirectedCell True indicates that a corresponding field is valid or mandatory when redirectedCell is true, and Cond redirectedCell False indicates that a corresponding field is valid or mandatory when redirectedCell is false.

For example, the first field carries the identifier of the target cell and is a newly added field, the second field carries information about a frequency that is the same as a frequency of the serving cell, and the second field is further used to carry information about a frequency that is different from the frequency of the serving cell. Specifically, when the second field carries the information about the frequency that is the same as the frequency of the serving cell (that is, the target frequency is the same as the frequency of the serving cell), it may indicate that the RRC connection release message is used for redirection of the terminal device to the target cell. In this case, the terminal device learns, based on the second field, that the target frequency is the same as the frequency of the serving cell and the redirection of the terminal device to the target cell needs to be performed, and directly establishes a connection to the target cell based on the first field without performing cell search and selection. When the second field carries the information about the frequency that is different from the frequency of the serving cell (that is, the target frequency is different from the frequency of the serving cell), it may indicate that the RRC connection release message is used for redirection of the terminal device to the target frequency, and the RRC connection release message may include the first field, or may not include the first field. In this case, the terminal device performs, based on the second field, cell search and selection on the target frequency, to be redirected to a selected cell.

The following provides an example of a structure of the RRC connection release message in this implementation.

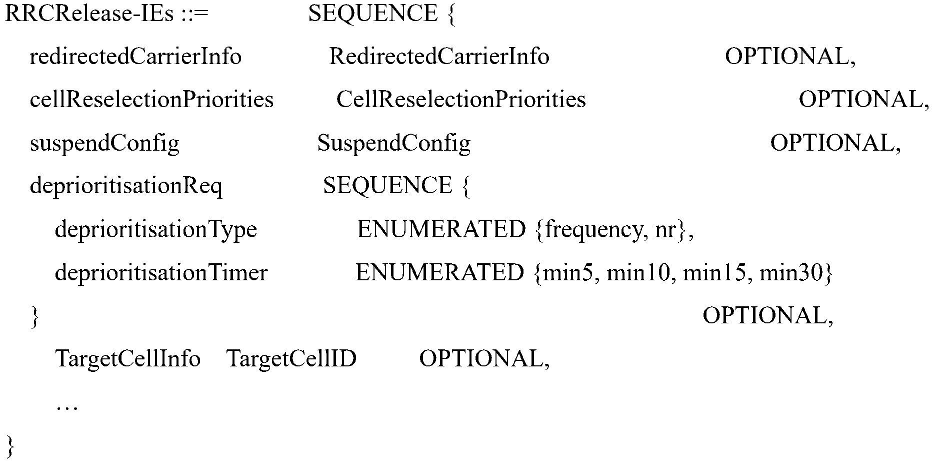

That "the second field carries information about a frequency that is the same as a frequency of the serving cell, and the second field is further used to carry information about a frequency that is different from the frequency of the serving cell" may also be described as: The second field is a redirected carrier information field, and the redirected carrier information field carries information about a frequency of the serving cell when the source network device redirects the terminal device to the target cell, or the redirected carrier information field carries information about a frequency that is different from the frequency of the serving cell when the source network device redirects the terminal device to the target frequency cell.

For example, an information element or a field in the structure of the RRC connection release message adapted to the foregoing implementation includes a redirected carrier information field, for example, redirectedCarrierInfo, a cell reselection priority field, for example, cellReselectionPriorities, a suspend configuration field, for example, suspendConfig, a deprioritisation type field, for example, deprioritisationReqType, a deprioritisation timer field, for example, deprioritisationTimer, and a first field, for example, TargetCellInfo. Optional indicates that a corresponding field is optional. Depending on a function of the RRC connection release message, the RRC connection release message carries different information elements, or information elements carried by the RRC connection release message indicate or carry different content. For example, when the RRC connection release message is used for cell reselection, the RRC connection release message may carry the cell reselection priority field. For another example, when the RRC connection release message is used for redirection of the terminal device to the target frequency, the RRC connection release message may carry the redirected carrier information field, where the redirected carrier information field carries the information about the target frequency, and the target frequency is different from the frequency of the serving cell. For another example, when the RRC connection release message is used for redirection of the terminal device to the target cell, the RRC connection release message may carry the first field and the redirected carrier information field, where the second field carries the information about the frequency that is the same as the frequency of the serving cell, and the first field carries the identifier of the target cell.

For example, the first field is included in the cell reselection priority field, and the second field carries the information about the target frequency for the redirection. Specifically, when the target frequency is the same as the frequency of the serving cell, it may indicate that the RRC connection release message is used for redirection of the terminal device to the target cell. In this case, the RRC connection release message includes the cell reselection priority field, and the cell reselection priority field includes the first field. In this case, the terminal device may learn, based on the second field, that the target frequency is the same as the frequency of the serving cell and the redirection of the terminal device to the target cell needs to be performed, and obtains the identifier of the target cell from the first field in the cell reselection priority field to establish a connection to the target cell without performing cell search and selection. When the target frequency is different from the frequency of the serving cell, it may indicate that the RRC connection release message is used for redirection of the terminal device to the target frequency, and the RRC connection release message may include the cell reselection priority field, or may not include the cell reselection priority field. In this case, the terminal device performs, based on the second field, cell search and selection on the target frequency, to be redirected to a selected cell.

The following provides an example of a structure of the RRC connection release message in this implementation.

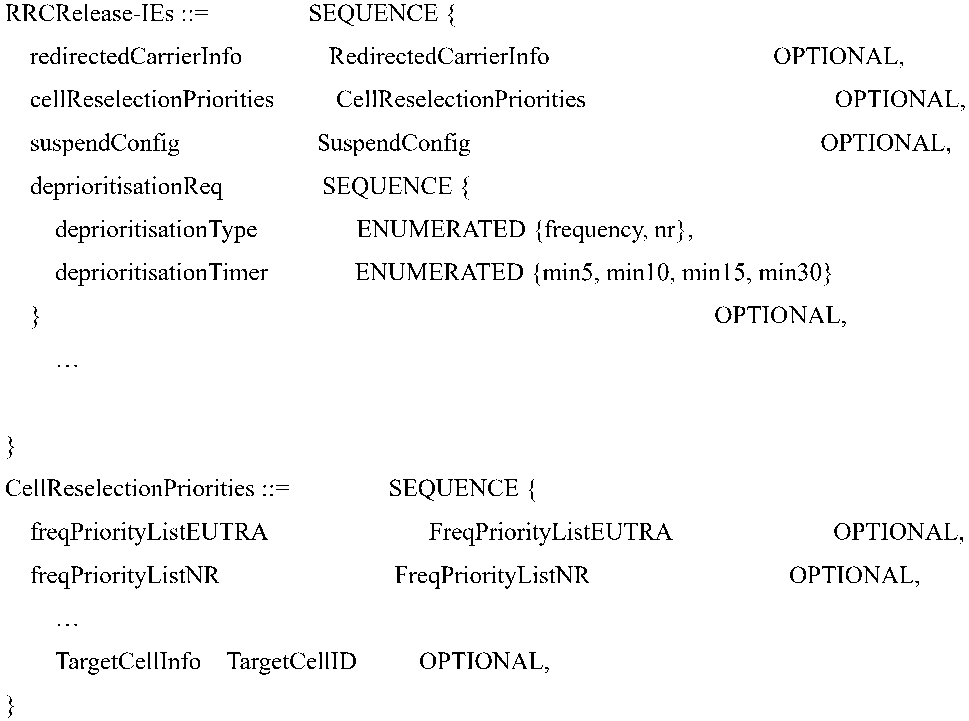

That "the first field is included in the cell reselection priority field" may mean that the identifier of the target cell is carried in the cell reselection priority field. In an example, the cell reselection priority field carries only the identifier of the target cell. In another example, the cell reselection priority field carries the identifier of the target cell and a priority of the target cell. In still another example, in addition to the identifier of the target cell and an optional priority of the target cell, the cell reselection priority field may further carry information about one or more frequencies and priorities corresponding to the one or more frequencies.

For example, an information element or a field in the structure of the RRC connection release message adapted to the foregoing implementation includes a redirected carrier information field, for example, redirectedCarrierInfo, a cell reselection priority field, for example, cellReselectionPriorities, a suspend configuration field, for example, suspendConfig, a deprioritisation type field, for example, deprioritisationReqType, and a deprioritisation timer field, for example, deprioritisationTimer. Optional indicates that a corresponding field is optional. Depending on a function of the RRC connection release message, the RRC connection release message carries different information elements, or information elements carried by the RRC connection release message indicate or carry different content. For example, when the RRC connection release message is used for cell reselection, the RRC connection release message may carry the cell reselection priority field. For another example, when the RRC connection release message is used for redirection of the terminal device to the target frequency, the RRC connection release message may carry the redirected carrier information field, namely the second field, for example, redirectedCarrierInfo, where the redirected carrier information field carries the information about the target frequency, and the target frequency is different from the frequency of the serving cell. For another example, when the RRC connection release message is used for redirection of the terminal device to the target cell, the RRC connection release message may carry the cell reselection priority field and the redirected carrier information field, namely the second field, for example, redirectedCarrierInfo, where the redirected carrier information field carries the information about the frequency that is the same as the frequency of the serving cell, the cell reselection priority field includes the first field, for example, TargetCellInfo, and the first field carries the identifier of the target cell, for example, TargetCellID. That is, in this example, an existing redirected carrier information field is modified, so that the redirected carrier information field may carry, based on an application scenario, the information about the frequency that is the same as the frequency of the serving cell, or carry the information about the frequency that is different from the frequency of the serving cell.

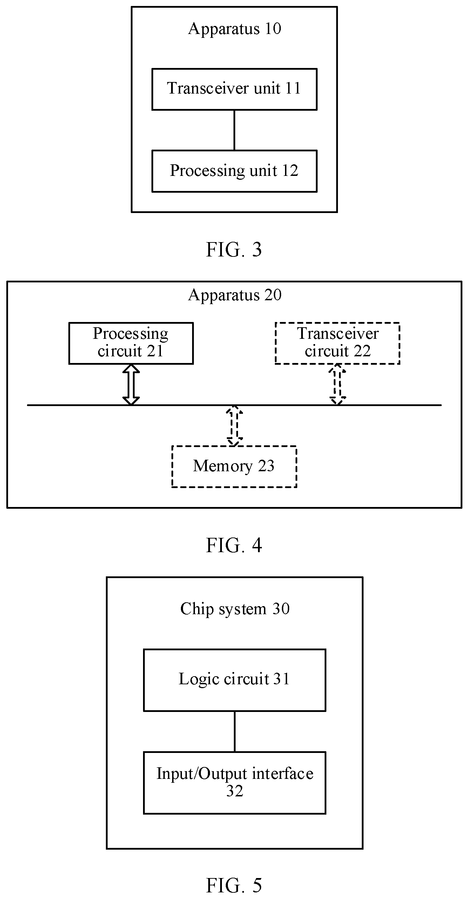

The foregoing describes in detail the method embodiment provided in this application with reference to FIG. 2. The following describes an apparatus embodiment of this application with reference to FIG. 3 to FIG. 5.

It may be understood that, to implement functions in the foregoing embodiment, apparatuses in FIG. 3 to FIG. 5 include corresponding hardware structures and/or software modules for performing the functions. A person skilled in the art should be easily aware that, with reference to units and method steps in the examples described in embodiments disclosed in this application, this application may be implemented in a form of hardware or a combination of hardware and computer software.

FIG. 3 and FIG. 4 are diagrams of possible structures of apparatuses according to embodiments of this application. The apparatuses may be configured to implement functions of the source network device or the terminal device in the foregoing method embodiment, and therefore can also implement beneficial effects of the foregoing method embodiment.

As shown in FIG. 3, an apparatus 10 includes a transceiver unit 11 and a processing unit 12.

When the apparatus 10 is configured to implement the function of the source network device in the foregoing method embodiment, the transceiver unit 11 is configured to perform sending and receiving steps of the source network device, for example, step 501 to step 503, and the processing unit 12 is configured to perform a processing step of the source network device. When the apparatus 10 is configured to implement the function of the terminal device in the foregoing method embodiment, the transceiver unit 11 is configured to perform sending and receiving steps of the terminal device, for example, step 501 to step 504, and the processing unit 12 is configured to perform a processing step of the terminal device.

For more detailed descriptions of the transceiver unit 11 and the processing unit 12, refer to the related descriptions in the foregoing method embodiment. Details are not described herein again.

As shown in FIG. 4, an apparatus 20 includes a processing circuit 21. The processing circuit 21 is coupled to a memory 23. The memory 23 is configured to store instructions. When the apparatus 20 is configured to implement the foregoing method, the processing circuit 21 is configured to execute the instructions in the memory 23, to implement a function of the foregoing processing unit 12.

Optionally, the apparatus 20 further includes the memory 23.

Optionally, the apparatus 20 further includes a transceiver circuit 22. The transceiver circuit may be referred to as a communication interface. The processing circuit 21 and the transceiver circuit 22 are coupled to each other. It may be understood that the transceiver circuit 22 may be a transceiver or an input/output interface. When the apparatus 20 is configured to implement the foregoing method, the processing circuit 21 is configured to execute the instructions to implement the function of the foregoing processing unit 12, and the transceiver circuit 22 is configured to implement a function of the foregoing transceiver unit 11.

Optionally, the apparatus 20 may be a source network device or a terminal device, and correspondingly, the transceiver circuit may be a transceiver.

Optionally, the apparatus 20 may be a chip used in a source network device or a terminal device, and correspondingly, the transceiver circuit may be an input/output interface.

For example, when the apparatus 20 is the chip used in the source network device or the terminal device, the chip implements the functions of the source network device or the terminal device in the foregoing method embodiment. The chip receives information from another module (for example, a radio frequency module or an antenna) in the source network device or the terminal device, where the information is sent by another apparatus to the source network device or the terminal device; or the chip sends information to another module (for example, a radio frequency module or an antenna) in the source network device or the terminal device, where the information is sent by the source network device or the terminal device to the another apparatus.

FIG. 5 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the method and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the source network device or the terminal device in the foregoing method embodiment.

For example, the logic circuit 31 is configured to implement processing-related operations performed by the source network device or the terminal device in the foregoing method embodiment, and the input/output interface 32 is configured to implement sending and/or receiving related operations performed by the source network device or the terminal device in the foregoing method embodiment.

This application further provides a communication apparatus, including a processing circuit. The processing circuit is coupled to a memory. The memory is configured to store a computer program or instructions and/or data. The processing circuit is configured to execute the computer program or the instructions stored in the memory, or read the data stored in the memory, to perform the method in the foregoing method embodiment. Optionally, there are one or more processing circuits. Optionally, the communication apparatus includes the memory. Optionally, there are one or more memories. Optionally, the memory and the processing circuit are integrated together or disposed separately.

This application further provides a chip, including a processing circuit. The processing circuit is coupled to a memory. The memory is configured to store a computer program or instructions. The processing circuit is configured to execute the computer program or the instructions stored in the memory, to implement the method performed by the source network device or the terminal device in the foregoing method embodiment. The memory may be located in the chip, or may be independent of the chip and located outside the chip. This is not limited herein.

This application further provides a computer-readable storage medium. The computer-readable storage medium stores computer instructions for implementing the method performed by the source network device or the terminal device in the foregoing method embodiment.

This application further provides a computer program product, including instructions. When the instructions are executed by a computer, the method performed by the source network device or the terminal device in the foregoing method embodiment is implemented.

This application further provides a communication system. The communication system includes at least one of the source network device or the terminal device in the foregoing embodiments.

For explanations and beneficial effects of related content in any one of the apparatuses provided above, refer to the corresponding method embodiment provided above. Details are not described herein again.

It may be understood that the processing circuit in embodiments of this application may be a processor or a circuit configured to perform a processing operation in a processor. The processor may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a source network device or a terminal device. Certainly, the processor and the storage medium may exist in the source network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the processes or the functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. A connection adjustment method, wherein the method is applied to a network device or a module in a network device, and the method comprises:
receiving a measurement report from a terminal device; and
sending a first message to the terminal device in response to the measurement report, wherein the first message indicates the terminal device to establish a connection to a target cell, the first message comprises an identifier of the target cell, and the target cell is determined based on the measurement report.

2. The method according to claim 1, wherein the first message is a radio resource control RRC connection release message.

3. The method according to claim 1 or 2, wherein the method further comprises:
sending measurement configuration information to the terminal device, wherein the measurement configuration information comprises intra-frequency measurement configuration information, and the measurement report is obtained based on the measurement configuration information.

4. A connection adjustment method, wherein the method is applied to a terminal device or a module in a terminal device, and the method comprises:
sending a measurement report to a network device;
receiving a first message from the network device, wherein the first message indicates the terminal device to establish a connection to a target cell, the first message comprises an identifier of the target cell, the target cell is determined based on the measurement report, and the first message is a radio resource control RRC connection release message; and
establishing a connection to the target cell based on the first message.

5. The method according to claim 4, wherein the method further comprises:
receiving measurement configuration information from the network device, wherein the measurement configuration information comprises intra-frequency measurement configuration information; and
determining the measurement report based on the measurement configuration information.

6. The method according to claim 2, 4, or 5, wherein the RRC connection release message comprises a first field, and the first field carries the identifier of the target cell.

7. The method according to claim 6, wherein the RRC connection release message further comprises a second field, and the second field indicates that the RRC connection release message is used for redirection of the terminal device to the target cell.

8. The method according to claim 7, wherein the second field carries information about a target frequency for the redirection, the target frequency is the same as a frequency of a serving cell of the terminal device, and a frequency of the target cell is the target frequency.

9. The method according to claim 8, wherein the first field is comprised in a cell reselection priority field.

10. The method according to claim 3 or 5, wherein the intra-frequency measurement configuration information comprises at least one of the following information:
a measurement object, a report configuration, a trigger quantity, or a measurement identifier, wherein
a frequency of a synchronization signal and physical broadcast channel block SSB comprised in the measurement object is the same as a frequency of an SSB of a serving cell of the terminal device, and a subcarrier spacing of the SSB comprised in the measurement object is the same as a subcarrier spacing of the SSB of the serving cell.

11. The method according to any one of claims 1 to 10, wherein the network device and a network device of the target cell are intra-frequency, and there is no communication connection between the network device and the network device of the target cell.

12. A communication apparatus, comprising a module or a unit configured to perform the method according to any one of claims 1 to 11.

13. A communication system, comprising a communication apparatus that performs the method according to any one of claims 1 to 3 and claims 6 to 11 and a communication apparatus that performs the method according to any one of claims 4 to 11.

14. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 11 through a logic circuit or by executing code instructions.

15. The communication apparatus according to claim 14, wherein the communication apparatus is a chip or a chip system.

16. A computer-readable storage medium, wherein the storage medium stores a computer program or instructions, and when the computer program or the instructions are executed by a communication apparatus, the method according to any one of claims 1 to 11 is implemented.

17. A computer program product, comprising a computer program or instructions, wherein when the computer program or the instructions are executed in a computer, the steps of the method according to any one of claims 1 to 11 are implemented.
